# EUROPEAN PATENT SPECIFICATION

(11) **EP 0 589 500 B1**
(45) Date of publication and mention of the grant of the patent: **22.04.1998**
(21) Application number: 93202363.3
(22) Date of filing: 11.08.1993
(51) Int. Cl.: G01B 5/20, G01B 7/28

(54) **Methods for gauging and scanning of screwthreads and similar grooves**
Verfahren zum Messen und Prüfen von Schraubengewinden und ähnlichen Nuten
Méthodes pour mesurer et vérifier des filets de vis et rainures similaires

(30) Priority: 21.08.1992 NL 9201492
(43) Date of publication of application: 30.03.1994
(73) Proprietor: Galestien, Reginald, NL-7861 BP Oosterhesselen (NL)
(72) Inventor: Galestien, Reginald, NL-7861 BP Oosterhesselen (NL)
(74) Representative: Prins, Adrianus Willem

(56) References cited:
- EP-A- 0 097 537
- GB-A- 2 052 065
- GB-A- 2 114 746

## Description

The invention concerns a method for the continuous dimensional scanning and gaging of the entire profiles of internal or external screwthreads, O-ringgrooves or similar grooves in holes or on shafts.

The invention also concerns the implementation of a comprehensive correction-method with the aim to compensate for the systematic errors of the combination of probe and said scanning and gaging apparatus and to relate the coordinate systems of different scans to each other by scanning a certified mastergauge.
This makes it possible to relate several profile scans to one coordinate system and then calculate all geometric screw parameters:
effective diameter, outside diameter, core diameter, flange- and topangles, pitch, profile accuracy, taper, stand-off, etc.

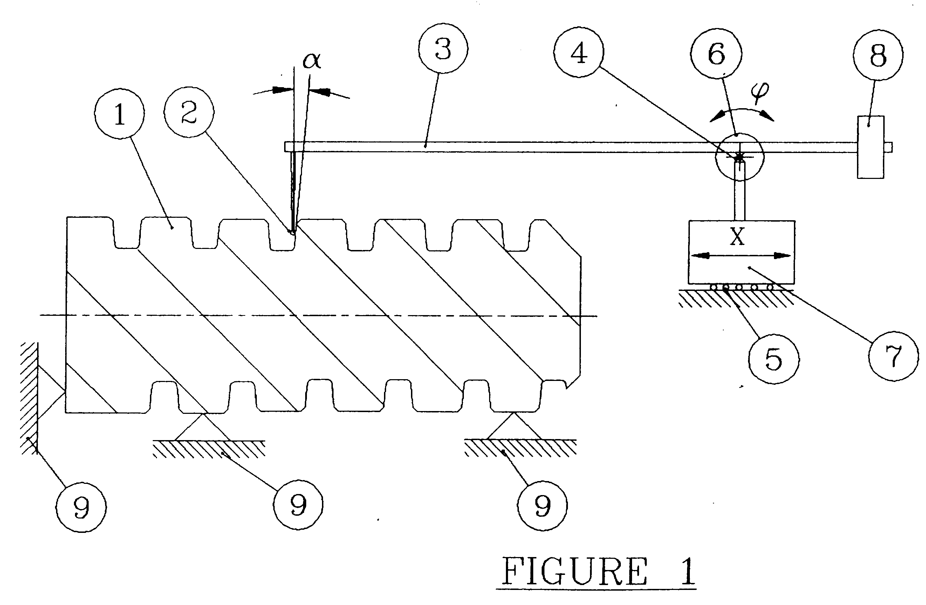

There are known apparatus for the dimensional scanning of profiles based upon the continuous mechanical scanning of said profiles by means of a contact probe, generally with a spherical or elliptical form. The probe can be displaced and positioned in a plane. So the scan will be a representation of an intersection of a plane and the workpiece (1). (see figure 1)
The workpiece is clamped on a stable fixture (9). The said probe (2) is mounted on a arm (3). The arm can rotate in a plane around an accurate hinge (4). The hinge is mounted on a mechanically driven linear displacement unit (5).
By continuously measuring the rotational position of the arm (3) by an angle encoder (6) or another suitable transducer in combination with the displacement of the linear displacement unit with a linear transducer (7), the position of the probe can be sensed during the scanning of the workpiece (1).
In this way all kinds of profiles can be scanned. The disadvantage of this method is that it is not possible to scan very steep profiles like O-ring-grooves, Sawtooth screwthreads, Blose screwthreads, VAM screwthreads, etc.
Because the probe has to follow the contour of the to be measured workpiece there is a mechanical restriction of angle a between the tangential moving-direction of the probe (2) and the surface of the workpiece (1). By reducing the contact force between said probe (2) and the workpiece (1) by setting e.g. the counterweight (8), this angular restriction can be widened. However a smaller contact force means a apparatus that is more sensitive to environmental vibrations and dirt particles on the work surface and thus the measuring results will be less accurate.
There are also gaging apparatus known, as decribed in GB 2 114 746, EP 0 097 537 A3 and GB 2 052 065 A, having a gauging tip engageable with a pipe screwthread with longitudinal, lateral and rotatable displacements of this gaging tip. The rotational displacement is around the longitudinal axis of the workpiece e.g. a threaded pipe. However these said instruments are not able to scan the entire profile of a screwthread with one rotation of the rotor e.g. because the location of the rotational apparatus axis is the same as the longitudinal axis of the workpiece. Only certain locations of the screwprofile can be reached by the probe leaving the rest of the screwprofile unmeasured.

The invention seeks to provide a scanning method that is able to scan the entire profile of screw threads or similar curves even with very small or negative flank angles and with a large enough engagement force that will ensure a reliable gaging contact in order to prevent inaccuracies due to external vibrations and dirt particles on the work surface.

This object is met by a scanning method according to claim 1 and a scanning apparatus according to claim 4. Preferred embodiments are disclosed in the dependent claims.

The invention will now be further explained with reference to the accompanying drawing.
Fig 1 diagrammatically shows a prior art apparatus for scanning screw-threads;
fig 2 diagrammatically shows an example of an embodiment of an apparatus for gauging and scanning screw threads and the like;
fig 3 diagrammatically shows part of a screw-thread scanned by a spherical probe tip and illustrates the deviations occuring when the probe tip is worn or damaged;
fig 4 diagrammatically illustrates scanning with a worn probe tip and the resultant corrected reconstructed screw-thread profile;
fig 5 diagrammatically illustrates a method and apparatus for performing simultaneous contour scans on different parts of a screw-thread of a workpiece; and
fig 6 diagrammatically illustrates a method and apparatus for performing simultaneous contour scans on different parts of the surface of a workpiece.

The scanning system of the invention is having a gaging probe engageable with the worksurface, means for longitudinal and rotatable displacements of the tip and means to sense such tip displacements for dataprocessing.

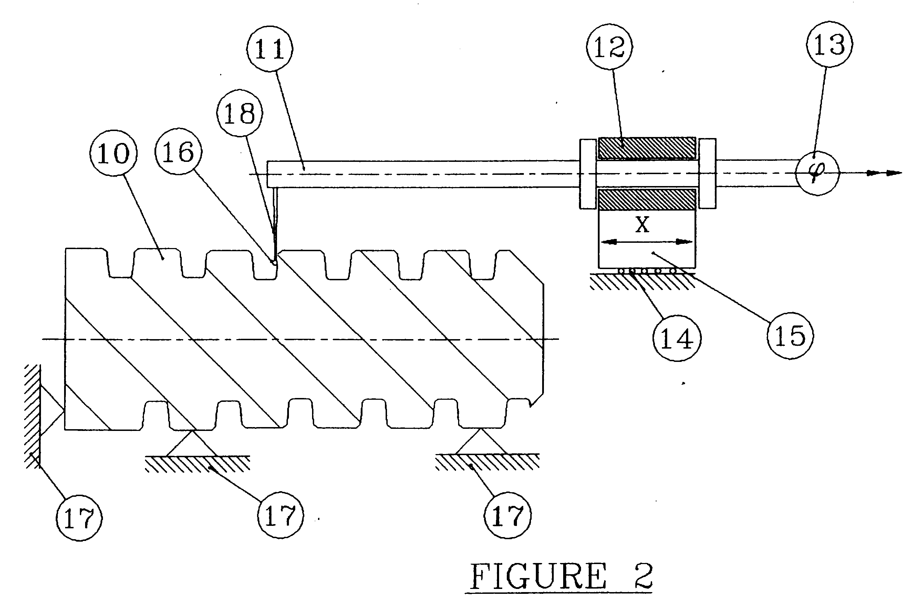

Figure 2 is presenting the principle of the scanning of external screwthreads.
The workpiece (10) is clamped to fixture (17) with its centreline adjusted parallel to the centreline of the measurement shaft (11).
The probe tip (16) is attached on a beam (18) that is extending outwardly from the measuring shaft (11) in order to engage the work surface (10).
The measurement shaft (11) can be rotated around its centreline. The said rotational displacement is supported by a precision bearing (12). The measurement shaft (11) can be translated parallel to its centreline. The said translation is supported by the linear displacement unit (14).
The rotational displacement of the measuring shaft is measured by a rotational encoder (13) or another suitable transducer system.
For the linear displacement of the measuring shaft (11) there is a linear transducer (15).
The probetip can describe by this means manually or mechanically an orbit that is located in a cylindrical plane by known axial and rotational drive systems, manually or mechanically operated. The centreline of this scan cylinder is equal to the centreline of the measurement shaft (11) and thus is parallel to the centreline of the workpiece (10) e.g. a threaded pipe and has a certain offset with the said workpiece-centreline. The said offset of the scancylinder and the workpiece-centreline is set in order to get the appropriate intersection of the to be scanned profile and the scan cylinder. By known mathematical transformations this cylindrical coordinate system can be transfered to e.g. a Carthesian coordinate system.
If the probe could be a sphere with a infinite small radius than the scanning of the work surface could be decribed by the intersection of the scancylinder and the worksurface. Because it is practically impossible to manufacture spherical probes with an infinite small radius, the raw measured contour will deviate from the actual contour and will not be located exactly on the scan cylinder surface.
The actual scanned contour can be estimated by correcting the raw measured contour data by the systematic deviations of the instrument caused by the form and wear of the actual probe tip, the elastic deformation of the probing system by the contact force between the worksurface and the probe tip, etc.

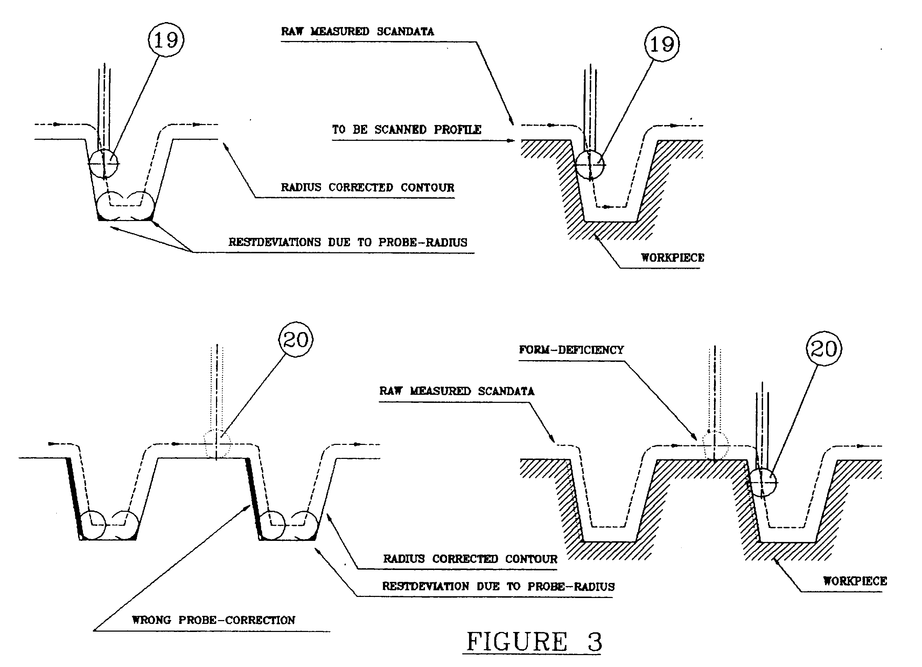

In figure 3 is illustrated, as a simplified example, the comparision of the profile scanning with a pure spherical probe tip (19) and the profile scanning with a spherical probe tip with a simple form-deficiency due to wear or faulty manufacturing (20).
As is made clear with the example of figure 3, the correction of the raw measured data with a simple constant radius-correction, as is done in known scanning systems, will not accurately describe the actual contour.

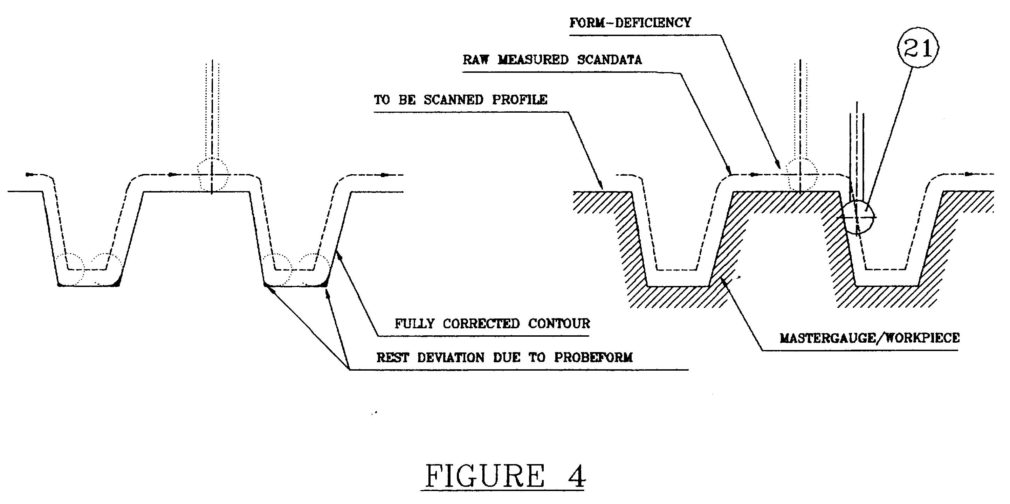

The invention as claimed seeks to provide a method for simple and accurate estimation of the said instrument-deviation-function in order to fully compensate for systematic instrument-deviations by scanning a certified mastergage, that is examined and calibrated by several other known means, and comparing the so gained raw measured data of the said mastergage scan with the calibration-data.
This correction-principle has been illustrated with a simplified example in figure 4. The form-deficiency of probe (21) is made known by scanning a calibrated mastergage.
The difference between the raw mastergage-contour and the calibrated mastergage-contour is the instrument-deviation-function. Correction of the raw mastergage-contour-data with the instrument-deviation-function will result in almost the actual mastergage-contour, free from most systematic errors, as is made clear in figure 4.

Another important feature of this instrument-correction-method is that integration of two or more scanning units in one instrument is making it possible to obtain two or more contour scans at several locations on the surface of one workpiece and so providing not only the separate profile scans but also the geometric relation between these said scans. These scanning units are not only restricted to apparatus in accordance with this invention. This makes it possible to relate several profile scans to one coordinate system and then calculate all geometric screwparameters:
effective diameter, outside diameter, core diameter, flange- and topangles, pitch, profile accuracy, taper, stand-off, etc.

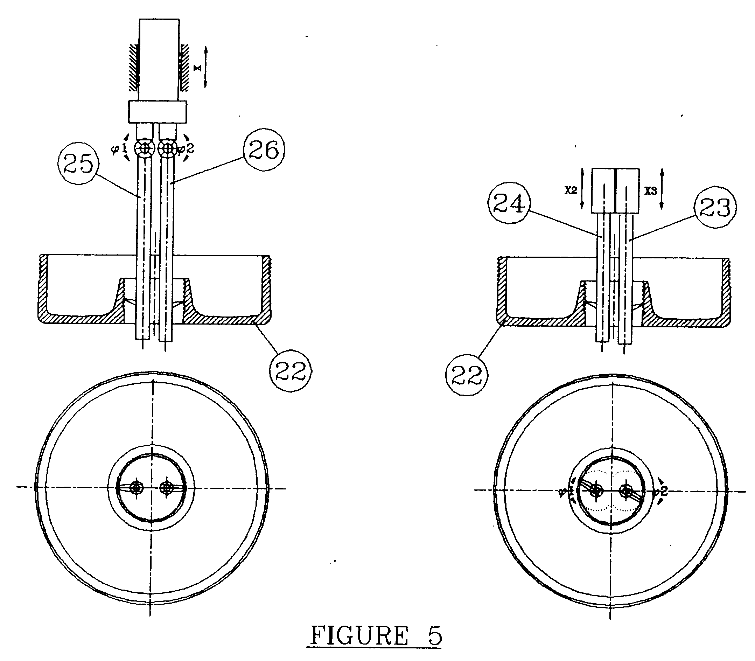

In figure 5 two application examples of the measurement of an internal screwthread (22) are given.
In this example the scanning of two diametrical opposite profiles of a calibrated screwthread gage followed by the screwthread scanning of the workpiece (22) by means of two scanning units (23, 24) in accordance with this invention will not only provide two profile scans but also the said two profilescans will be linked together geometrically and thus providing all the necessary data for calculating effective diameters, core diameters, outside diameters, etc.
The coordinatesystems of the two combined scanning units (23,24) of this example are linked together by means of the calibrated screwthread mastergage.

The similar corrected measurement of the internal screwthread (22) can also be carried out by two conventional scanners (25,26).

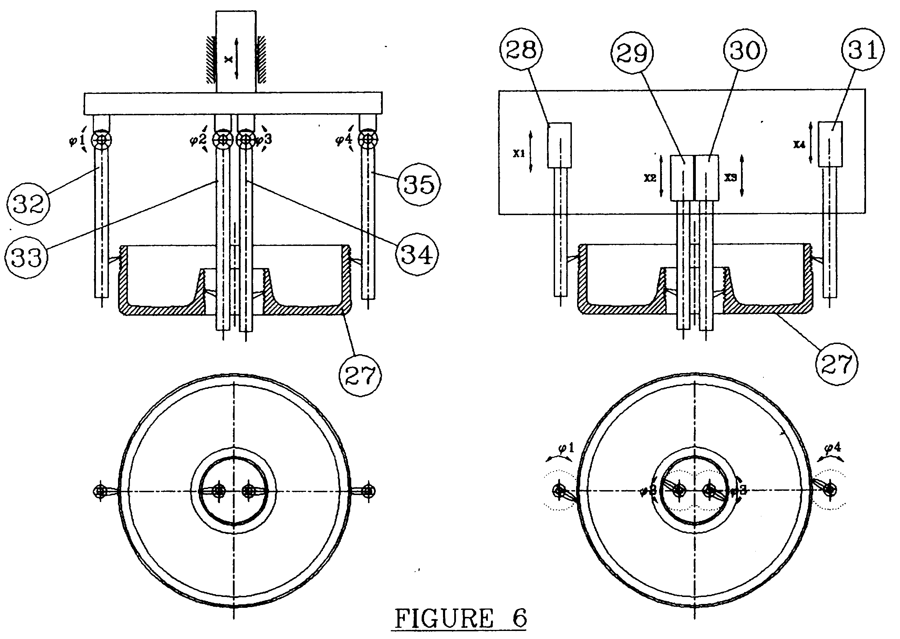

In figure 6 two application examples of the simultaneous measurement of an internal and an external screwthread (27) are given.
In this example the scanning of two pairs of diametrical opposite profiles of a calibrated screwthread gage followed by the screwthread scanning of the workpiece (27) by means of four combined scanning units (28,29,30,31) in accordance with this invention will not only provide two profile scans but also the said two profile scans will be linked together geometrically and thus providing all the necessary data for calculating effective diameters, core diameters, outside diameters, etc. and also the relative positions of the external screwthread and the external thread.
The coordinate systems of the four combined scanning units (28,29,30,31) of this example are linked together by means of the calibrated screwthread mastergage.
The similar corrected measurement of the internal screwthreads (27) can also be carried out by four combined conventional scanners (32,33,34,35).

The measurement range can be enlarged by displacing the separate scanning units relative to each other from the initial calibration-position, after the scanning of the mastergage, and measuring the said displacement. By addition of this said displacement to the scan values it is possible to measure workpieces that have other nominal dimensions than the mastergage.

## Claims

1. A method for the geometrical scanning of the surfaces of internal and external grooves in a workpiece such as screw threads, O-ring grooves etcetera in holes or on shafts by means of a measuring apparatus comprising at least one measuring arm (11) in operation extending and being movable in its longitudinal direction along the surface to be scanned and a beam (18) attached at the end of the arm (11) and extending transversely from the arm (11), the beam at its free end carrying a probe tip (16) for engaging and moving over the surface to be scanned, characterized in that a mastergauge is made; that the mastergauge is calibrated by very accurately measuring and recording its dimensions; that the mastergauge is scanned by means of the measuring apparatus, and that any deviations between the actual calibrated dimensions of the mastergauge and the dimensions according to the measurement by the measuring apparatus are detected and used to correct later measurements of workpieces.

2. A method according to claim 1, characterized by using a measuring apparatus comprising two or more probe tips for scanning different parts of one and the same surface and/or different surfaces of a workpiece.

3. A method according to claim 1 or 2, characterized in that the arm (11) is placed with its longitudinal centerline substantially parallel to but spaced from the centerline of the workpiece and is rotated about its longitudinal centerline when the probe tip (16) engages a flank of a groove until the probe tip reaches the top or the bottom of said flank, and in that transducer means (13) are used for sensing said rotational movement of the arm (11).

4. An apparatus for the geometrical scanning of the surfaces of internal and external grooves in a workpiece such as screw-threads, O-ring grooves etcetera in holes or on shafts by means of a measuring apparatus comprising at least one measuring arm (11) in operation extending and being movable in its longitudinal direction along the surface to be scanned and a beam (18) attached at the end of the arm (11) and extending transversely from the arm (11), the beam at its free end carrying a probe tip (16) for engaging and moving over the surface to be scanned, said probe tip being arranged to move in a direction substantially perpendicular to the longitudinal axis of the arm (11) in order to be able to follow the contour of the grooves while the arm (11) is moved in its longitudinal direction, said apparatus further including means for clamping the workpiece and transducer means (15) for sensing the movements of the arm (11), characterized in that for effecting the movement of the probe tip in a direction substantially perpendicular to the longitudinal axis of the arm the arm is placed with its longitudinal centerline substantially parallel to but spaced from the centerline of the workpiece and is rotated about its longitudinal centerline when the probe tip (16) engages a flank of a groove until the probe tip reaches the top or the bottom of said flank, and in that transducer means (13) are used for sensing said rotational movement of the arm (11).

5. An apparatus as claimed in claim 4, characterized in that the apparatus has two or more probe tips for scanning different parts of one and the same surface or different surfaces of a workpiece.

6. An apparatus as claimed in claim 5, characterized by at least one pair of probe tips arranged for scanning substantially diametrically opposed parts of a screw-thread or similar groove in a workpiece.

## Patentansprüche

1. Verfahren zum geometrischen Abtasten der Oberflächen innerer und äußerer Rillen bei einem Werkstück, etwa an Schraubengewinden, O-Ring-Nuten usw., in Löchern oder an Schäften mit Hilfe einer Meßvorrichtung mit wenigstens einem sich in Betrieb in seiner Längsrichtung entlang der abzutastenden Oberfläche erstreckenden und entlang dieser bewegbaren Meßarm (11) und einem am Ende des Arms (11) angebrachten und sich von dem Arm (11) quer erstreckenden Ausleger (18), wobei der Ausleger an seinem freien Ende eine Sondenspitze (16) trägt, die an der abzutastenden Oberfläche angreift und sich darüberbewegt, dadurch gekennzeichnet, daß eine Prüflehre angefertigt wird; daß die Prüflehre durch eine sehr genaue Messung und Aufzeichnung ihrer Abmessungen kalibriert wird; daß die Prüflehre durch die Meßvorrichtung abgetastet wird und daß Abweichungen zwischen den kalibrierten Abmessungen der Prüflehre und den Abmessungen gemäß der durch die Meßvorrichtung durchgeführten Messung detektiert und zum Korrigieren späterer Messungen an Werkstücken verwendet werden.

2. Verfahren nach Anspruch 1, dadurch gekennzeichnet, daß eine Meßvorrichtung mit zwei oder mehr Sondenspitzen zum Abtasten verschiedener Teile ein und derselben Oberfläche und/oder verschiedener Oberflächen eines Werkstücks verwendet werden.

3. Verfahren nach Anspruch 1 oder 2, dadurch gekennzeichnet, daß der Arm (11) mit seiner längslaufenden Mittellinie im wesentlichen parallel zu der Mittellinie des Werkstücks, aber von dieser beabstandet angeordnet wird und um seine längslaufende Mittellinie gedreht wird, wenn die Sondenspitze (16) mit einer Flanke einer Rille zusammenwirkt, bis die Sondenspitze die Ober- oder Unterseite der Flanke erreicht, und dadurch, daß eine Meßwertwandlereinrichtung (13) zum Detektieren der Drehbewegung des Armes (11) verwendet wird.

4. Vorrichtung zum geometrischen Abtasten der Oberflächen innerer und äußerer Rillen bei einem Werkstück, etwa an Schraubengewinden, O-Ring-Nuten usw., in Löchern oder an Schäften mit Hilfe einer Meßvorrichtung mit wenigstens einem sich in Betrieb in seiner Längsrichtung entlang der abzutastenden Oberfläche erstreckenden und entlang dieser bewegbaren Meßarm (11) und einem am Ende des Arms (11) angebrachten und sich von dem Arm (11) quer erstreckenden Ausleger (18), wobei der Ausleger an seinem freien Ende eine Sondenspitze (16) trägt, die an der abzutastenden Oberfläche angreift und sich darüberbewegt, wobei die Sondenspitze geeignet ist, sich in einer Richtung zu bewegen, die im wesentlichen quer zu der Längsachse des Arms (11) verläuft, derart, daß sie in der Lage ist, der Kontur der Nuten zu folgen, während der Arm (11) in seiner Längsrichtung bewegt wird, wobei die Vorrichtung ferner eine Einrichtung zum Einspannen des Werkstücks und eine Meßwertwandlereinrichtung (15) zum Detektieren der Bewegungen des Arms aufweist, dadurch gekennzeichnet, daß zur Durchführung der Bewegung der Sondenspitze in einer im wesentlichen quer zu der Längsachse des Arms verlaufenden Richtung der Arm mit seiner längslaufenden Mittellinie im wesentlichen parallel zu der Mittellinie des Werkstücks, aber von dieser beabstandet angeordnet ist und um seine längslaufende Mittellinie gedreht wird, wenn die Sondenspitze (16) mit einer Flanke einer Rille zusammenwirkt, bis die Sondenspitze die Ober- oder Unterseite der Flanke erreicht, und daß eine Meßwertwandlereinrichtung (13) zum Detektieren der Drehbewegung des Armes (11) verwendet wird.

5. Vorrichtung nach Anspruch 4, dadurch gekennzeichnet, daß die Vorrichtung zwei oder mehr Sondenspitzen zum Abtasten verschiedener Teile ein und derselben Oberfläche oder verschiedener Oberflächen eines Werkstücks aufweist.

6. Vorrichtung nach Anspruch 5, gekennzeichnet durch wenigstens ein Paar Sondenspitzen, die zum Abtasten im wesentlichen diametral entgegengesetzter Teile eines Schraubengewindes oder einer ähnlichen Nut bei einem Werkstück geeignet sind.

## Revendications

1. Procédé de balayage géométrique des surfaces des gorges internes et externes d'une pièce, telles que des filets, des gorges de logement de joint torique, etc., formés dans des trous ou sur des arbres, à l'aide d'un appareil de mesure qui comporte au moins un bras de mesure (11) qui, lors du fonctionnement, s'étend dans une direction longitudinale et est mobile suivant cette direction le long de la surface à balayer, et un fléau (18) fixé à l'extrémité du bras (11) et disposé transversalement au bras (11), le fléau, à son extrémité libre, portant une pointe (16) de sonde destinée à être au contact de la surface à balayer et à se déplacer sur cette surface, caractérisé en ce qu'un calibre principal est réalisé, en ce que le calibre principal est étalonné par mesure très précise et enregistrement de ses dimensions, en ce que le calibre principal est balayé à l'aide de l'appareil de mesure, et en ce que tout écart entre les dimensions réelles étalonnées du calibre principal et les dimensions obtenues par mesure par l'appareil de mesure est détecté et utilisé pour les mesures ultérieures des pièces.

2. Procédé selon la revendication 1, caractérisé par l'utilisation d'un appareil de mesure qui comporte au moins deux bouts de sonde destinés à balayer des parties différentes d'une seule et même surface et/ou des surfaces différentes d'une pièce.

3. Procédé selon la revendication 1 ou 2, caractérisé en ce que le bras (11) est disposé de manière que son axe central longitudinal soit pratiquement parallèle à l'axe central de la pièce mais à distance de cet axe et soit entraîné en rotation autour de son axe central longitudinal lorsque le bout (16) de sonde est au contact du flanc d'une gorge et jusqu'à ce que le bout de sonde atteigne la partie supérieure ou la partie inférieure du flanc, et en ce qu'un dispositif transducteur (13) est utilisé pour la détection du mouvement de rotation du bras (11).

4. Appareil de balayage géométrique des surfaces des gorges internes et externes d'une pièce, telles que des filets, des gorges pour joint torique, etc. formés dans des trous ou sur des arbres, à l'aide d'un appareil de mesure, comprenant au moins un bras de mesure (11) qui, lors du fonctionnement a une direction longitudinale et est mobile suivant cette direction le long de la surface à balayer, et un fléau (18) fixé à l'extrémité du bras (11) et disposé transversalement au bras (11), le fléau portant, à son extrémité libre, un bout (16) de sonde destiné à être au contact de la surface à balayer et à se déplacer sur cette surface, le bout de sonde étant destiné à se déplacer en direction pratiquement perpendiculaire à l'axe longitudinal du bras (11) afin qu'il puisse suivre le profil des gorges alors que le bras (11) est déplacé dans sa direction longitudinale, l'appareil comprenant en outre un dispositif de serrage de la pièce et un dispositif transducteur (15) destiné à détecter les mouvements du bras (11), caractérisé en ce que, pour réaliser le déplacement du bout de sonde en direction sensiblement perpendiculaire à l'axe longitudinal du bras, ce bras est disposé de manière que son axe longitudinal central soit pratiquement parallèle à l'axe central de la pièce mais à distance de cet axe, et soit entraîné en rotation autour de l'axe longitudinal central lorsque le bout (16) de sonde est au contact du flanc d'une gorge et jusqu'à ce que le bout de sonde atteigne la partie supérieure ou la partie inférieure du flanc, et en ce qu'un dispositif transducteur (13) est utilisé pour détecter ce mouvement de rotation du bras (11).

5. Appareil selon la revendication 4, caractérisé en ce que l'appareil comporte au moins deux bouts de sonde destinés à balayer des parties différentes d'une seule et même surface ou de surfaces différentes d'une pièce.

6. Appareil selon la revendication 5, caractérisé par au moins deux bouts de sonde destinés à balayer des parties qui sont pratiquement diamétralement opposées d'un filet ou d'une gorge analogue formé dans une pièce.
